# EUROPÄISCHE PATENTANMELDUNG

(11) **EP 1 314 900 A1**
(43) Veröffentlichungstag der Anmeldung: **28.05.2003**
(21) Anmeldenummer: 02017014.8
(22) Anmeldetag: 27.07.2002
(51) Int. Cl.: F16C 27/06

(54) **Lager**

(30) Priorität: 24.11.2001 DE 10157839
(71) Anmelder: Carl Freudenberg KG, 69469 Weinheim (DE)
(72) Erfinder: Schmidt, Frank, 79379 Müllheim-Vögisheim (DE); Mahling, Andreas, 79379 Müllheim (DE)

(57) **Zusammenfassung**

Lager, umfassend einen Innenring (1) und einen den Innenring (1) mit radialem Abstand umschließenden Außenring (2), wobei in dem durch den Abstand gebildeten Spalt (3) zumindest zwei in Umfangsrichtung mit Abstand zueinander benachbarte Stützkörper (4, 5) aus gummielastischem Werkstoff unter elastischer Vorspannung ungebunden zu Innen- (1) und Außenring (2) angeordnet sind.

## Beschreibung

### Stand der Technik

Lager sind allgemein bekannt und gelangen beispielsweise als Antriebswellenlager in Kraftfahrzeugen zur Anwendung. Die Lager umfassen dabei einen Innenring und einen den Innenring mit radialem Abstand umschließenden Außenring, wobei der Innenring und der Außenring durch einen Stützkörper aufeinander abgestützt sind. Der Stützkörper besteht aus einem gummielastischen Werkstoff und ist haftend, beispielsweise durch eine Verklebung oder eine Vulkanisation mit dem Innenring und dem Außenring verbunden. Dabei ist allerdings zu beachten, dass derartige Lager durch die Bindung des Stützkörpers am Innen- und Außenring nur aufwendig herstellbar sind; eine schnelle Herstellung von Musterteilen ist durch den aufwendigen Herstellungsprozess nicht möglich.

### Darstellung der Erfindung

Der Erfindung liegt die Aufgabe zugrunde, ein Lager der eingangs genannten Art derart weiterzuentwickeln, dass es einen einfachen Aufbau aufweist sowie einfach und kostengünstig herstellbar ist. Insbesondere soll die Möglichkeit bestehen, durch einfachen und raschen Austausch der Stützkörper bedarfsweise Lager mit unterschiedlichen Gebrauchseigenschaften, beispielsweise für eine Bemusterung, herzustellen. Für Versuchszwecke soll ferner die Möglichkeit bestehen, durch ausschließlichen Austausch der Stützkörper, bei ansonsten unverändertem Lager, zu guten Versuchsergebnissen zu gelangen.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein Lager vorgesehen, umfassend einen Innenring und einen den Innenring mit radialem Abstand umschließenden Außenring, wobei in dem durch den Abstand gebildeten Spalt zumindest zwei in Umfangsrichtung mit Abstand zueinander benachbarte Stützkörper aus gummielastischem Werkstoff unter elastischer Vorspannung ungebunden zu Innen- und Außenring angeordnet sind. Durch die ungebundene Zuordnung der Stützkörper zu Innen- und Außenring sind die Stützkörper separat und unabhängig von Innen- und Außenring austauschbar, was insbesondere bei der Dimensionierung und Auslegung der Lager von hervorzuhebendem Vorteil ist. Sind beispielsweise die Gebrauchseigenschaften eines getesteten Lagers für den jeweiligen Anwendungfall noch nicht zufriedenstellend, können die Stützkörper aus dem Spalt entnommen und durch andere, geeignete Stützkörper ersetzt werden. Eine solche Anpassung der Gebrauchseigenschaften des Lagers an den jeweiligen Anwendungfall kann erfolgen, ohne dass der Innenring und/oder der Außenring ausgetauscht werden.

Die Stützkörper können kraft- und/oder formschlüssig mit dem Innen- und/oder dem Außenring verbunden sein. Entscheidend ist, wie zuvor bereits ausgeführt, dass die Stützkörper ungebunden sowohl zum Innenring als auch zum Außenring angeordnet sind. Im Rahmen der vorliegenden Erfindung sind die Stützkörper bevorzugt formschlüssig mit dem Innen- und dem Außenring verbunden. Eine derartige Festlegung der Stützkörper innerhalb des Spalts führt zu einer guten Haltbarkeit des Lagers, wobei eine ausgezeichnete räumliche Zuordnung der Bestandteile des Lagers zueinander während der gesamten Gebrauchsdauer gewährleistet ist.

Würden demgegenüber die Stützkörper ausschließlich kraftschlüssig mit dem Innen- und dem Außenring verbunden sein, bestünde bei Einleitung axialer Kräfte die Gefahr einer unerwünschten Verschiebung von Innenring und Außenring relativ zueinander, in axialer Richtung. Einer weiter vereinfachten Herstellbarkeit des Lagers würden dann verschlechterte Gebrauchseigenschaften entgegenstehen.

Der Innen- und/oder der Außenring können auf den einander zugewandten Seiten Ausnehmungen für die Stützkörper aufweisen, wobei die Begrenzungen der Ausnehmungen kongruent zur Oberfläche der Stützkörper gestaltet sind. Derartige Ausnehmungen gelangen zur Anwendung, wenn die Stützkörper formschlüssig mit dem Innen- und dem Außenring verbunden sind. Durch die kongruenten Ausnehmungen werden die Stützkörper in axialer Richtung des Lagers und in Umfangsrichtung zuverlässig in ihrer Position gehalten; eine unerwünschte Verlagerung der Stützkörper innerhalb des Spalts wird dadurch ausgeschlossen.

Zumindest einer der Stützkörper kann kugelförmig gestaltet sein.

Nach einer anderen Ausgestaltung besteht die Möglichkeit, dass zumindest einer der Stützkörper im Wesentlichen würfelförmig gestaltet ist oder dass zumindest einer der Stützkörper im Wesentlichen zylinderförmig gestaltet ist und sich bogenförmig in Umfangsrichtung des Spalts erstreckt. Durch die ungebundene Anordnung der Stützkörper zwischen Innen- und Außenring besteht generell die Möglichkeit, verschiedenartig gestaltete Stützkörper innerhalb eines Spalts anzuordnen, abhängig davon, welche Gebrauchseigenschaften gewünscht werden und/oder wie die Einbausituation des Lagers ist. Hinsichtlich einer einfachen und kostengünstigen Herstellbarkeit sollten jedoch innerhalb eines Lagers einheitlich gestaltete Stützkörper zur Anwendung gelangen, die sich jedoch bedarfsweise hinsichtlich ihres Werkstoffs voneinander unterscheiden können. Das Betriebsverhalten des Lagers kann dadurch in gewünschtem Maße beeinflusst werden.

Die Form der Stützkörper ist abhängig von den Federkennlinien, die für den jeweiligen Bedarfsfall benötigt werden und/oder von den geometrischen Gegebenheiten des jeweiligen Anwendungsfalls.

Die Stützkörper können innerhalb des Spalts gleichmäßig in Umfangsrichtung verteilt angeordnet sein. Gelangen beispielsweise zumindest drei, bevorzugt sechs gleichmäßig in Umfangsrichtung verteilte Stützkörper zur Anwendung, sind die Gebrauchseigenschaften des Lagers weitgehend unabhängig davon, wie das Lager eingebaut ist, unter der Voraussetzung, dass alle Stützkörper in Form und Werkstoff identisch ausgebildet sind und dadurch im Wesentlichen dieselben Gebrauchseigenschaften aufweisen.

Für Anwendungfälle, in denen zum Beispiel in einer ersten radialen Richtung eine geringere elastische Nachgiebigkeit gefordert ist, als in einer weiteren zweiten radialen Richtung, die beispielsweise senkrecht zur ersten Richtung liegt, kann es sinnvoll sein, dass die Stützkörper in Form und/oder Werkstoff abweichend, an die jeweiligen Gegebenheiten des Anwendungsfalles angepasst ausgebildet sind. Ist das Lager beispielsweise durch eine statische Vorlast belastet, sollten die auf Druck belasteten Stützkörper aus einem Werkstoff mit möglichst geringer Relaxation bestehen.

Der Innen- und/oder der Außenring können aus polymerem Werkstoff bestehen. Hierbei ist von Vorteil, dass polymere Werkstoffe im Vergleich zu den meisten metallischen Werkstoffen rostfrei, besonders einfach und kostengünstig verarbeitbar und leicht sind.

### Kurzbeschreibung der Zeichnung

Drei Ausführungsbeispiele des erfindungsgemäßen Lagers werden nachfolgend anhand der Figuren 1 bis 6 näher beschrieben. Diese zeigen jeweils in schematischer Darstellung:
- Fig. 1: Eine Ansicht eines ersten Ausführungsbeispiels,
- Fig. 2: den Längsschnitt A-A durch das Lager aus Fig. 1,
- Fig. 3: eine Ansicht eines zweiten Ausführungsbeispiels,
- Fig. 4: einen Längsschnitt durch das Lager aus Fig. 3 entlang der Linie B-B,
- Fig. 5: eine Ansicht eines dritten Ausführungsbeispiels,
- Fig. 6: einen Längsschnitt durch das Lager aus Fig. 5 entlang der Linie C-C.

### Ausführung der Erfindung

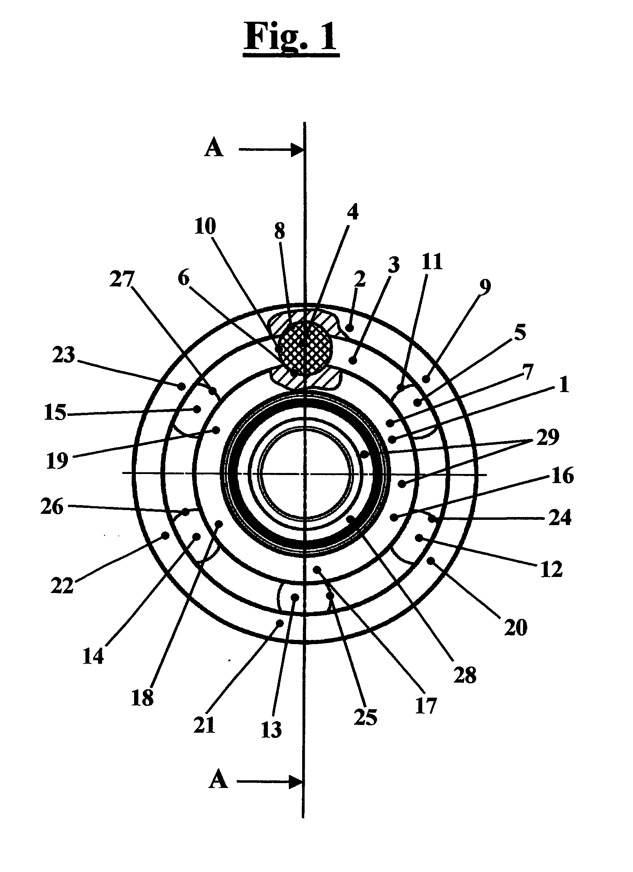

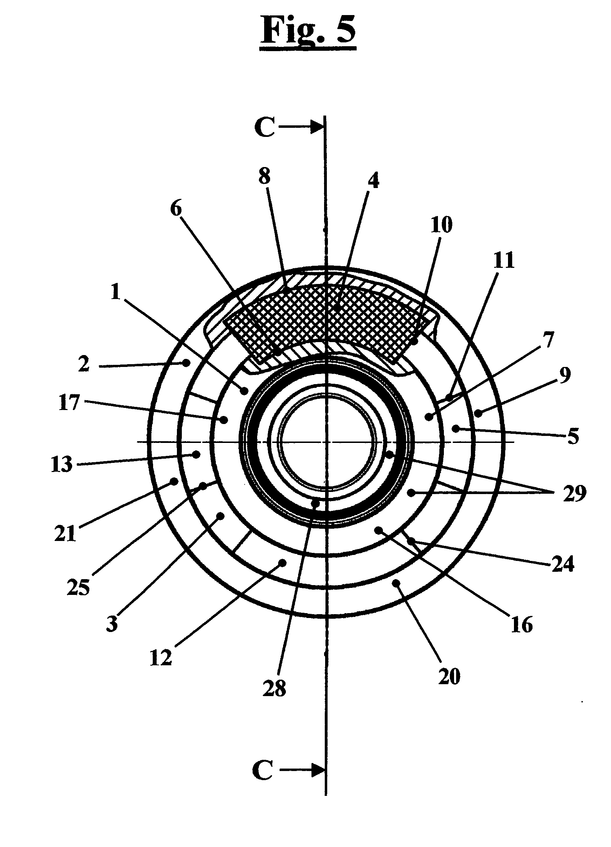

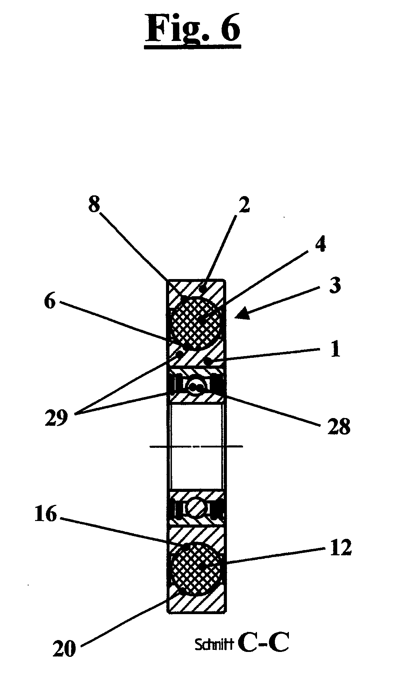

In den Figuren 1 bis 6 sind drei Ausführungsbeispiele eines erfindungsgemäßen Lagers gezeigt. Die Lager umfassen jeweils einen Innenring 1, der von einem Außenring 2 mit radialem Abstand umschlossen ist. Der Innenring 1 und der Außenring 2 bestehen in den hier gezeigten Ausführungsbeispielen jeweils aus polymerem Werkstoff. In dem durch den Abstand gebildeten Spalt 3 sind in den Ausführungsbeispielen Figuren 1 bis 4 jeweils sechs Stützkörper 4, 5, 12, 13, 14, 15 aus gummielastischem Werkstoff, im Ausführungsbeispiel gemäß den Figuren 5 und 6 vier Stützkörper 4, 5, 12, 13 aus gummielastischem Werkstoff angeordnet. Die Stützkörper 4, 5, 12, 13, 14 und 15 sind jeweils unter radialer elastischer Vorspannung ungebunden zu Innen- 1 und Außenring 2 angeordnet.

Die Stützkörper 4, 5, 12, 13, 14 und 15 sind in den hier gezeigten Ausführungsbeispielen hauptsächlich durch Formschluss sowohl mit dem Innen- 1 als auch mit dem Außenring 2 verbunden. Der Formschluss wird dadurch erzeugt, dass der Innen- 1 und der Außenring 2 auf den einander zugewandten Seiten Ausnehmungen 6, 7, 8, 9 und 16 bis 23 aufweisen, wobei diese Ausnehmungen 6, 7, 8, 9 und 16 bis 23 Begrenzungen aufweisen, die kongruent zu den Oberflächen 10, 11, 24 bis 27 der Stützkörper 4, 5, 12 bis 15 ausgebildet sind.

In Figur 1 ist ein erstes Ausführungsbeispiel in einer Ansicht gezeigt, wobei die Stützkörper 4, 5, 12 bis 15 gleichmäßig in Umfangsrichtung verteilt angeordnet sind und eine identische Form aufweisen. Im hier gezeigten Ausführungsbeispiel ist neben der Form auch der Werkstoff der Stützkörper 4, 5, 12 bis 15 identisch.

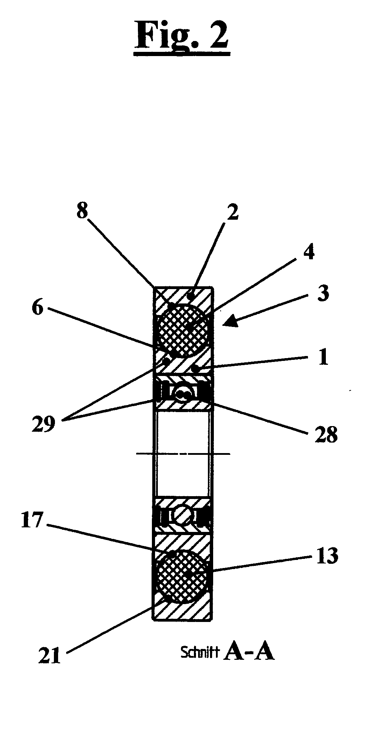

Im Ausbruch in Figur 1 ist in Verbindung mit der Darstellung des Längsschnitts gemäß A-A aus Figur 2 zu erkennen, dass die Stützkörper 4, 5, 12 bis 15 kugelförmig gestaltet sind.

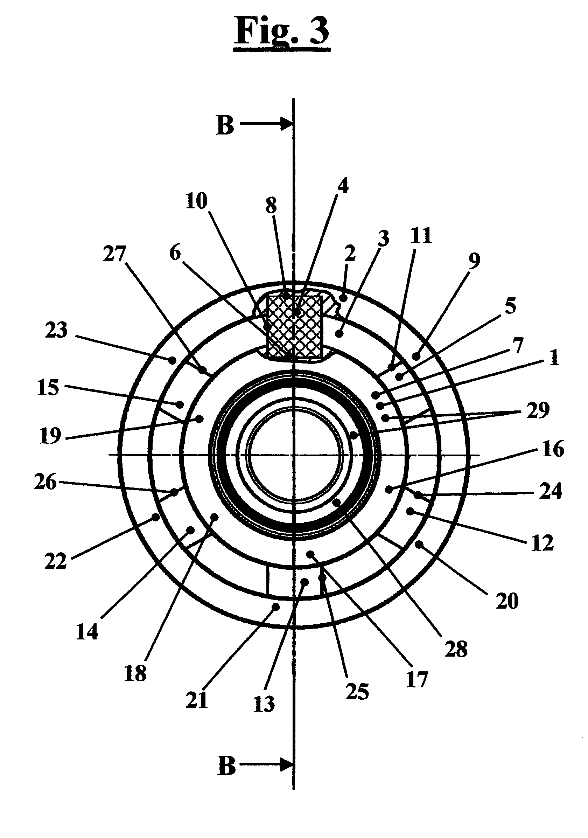

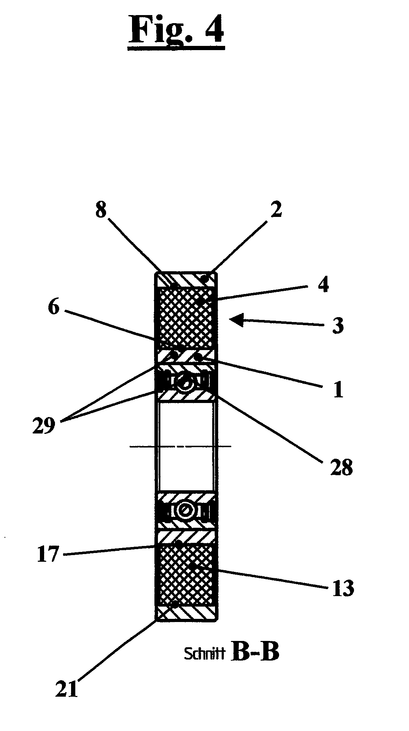

Das zweite Ausführungsbeispiel, dargestellt in den Figuren 3 und 4, unterscheidet sich von dem zuvor beschriebenen im Wesentlichen durch die Gestalt der Stützkörper 4, 5, 12 bis 15, wobei die Stützkörper 4, 5, 12 bis 15 in diesem Ausführungsbeispiel in ihrer Form ebenfalls übereinstimmend, im Werkstoff jedoch demgegenüber unterschiedlich ausgebildet sind.

Im dritten Ausführungsbeispiel gemäß den Figuren 5 und 6 sind lediglich vier Stützkörper 4, 5, 12, 13 angeordnet, die ungleichmäßig innerhalb des Spalts 3 verteilt sind. Die Stützkörper 4 und 12 sowie 5 und 13 sind übereinstimmend ausgebildet, wobei die Stützkörper 4 und 12 jedoch eine andere Form aufweisen und aus unterschiedlichen Materialien, bezogen auf die Stützkörper 5 und 13 bestehen.

In jedem der hier gezeigten Ausführungsbeispiele können Stützkörper 4, 5, 12 bis 15 zur Anwendung gelangen, die innerhalb des Spalts 3 gleichmäßig oder ungleichmäßig in Umfangsrichtung verteilt angeordnet sind. Alle Stützkörper 4, 5, 12 bis 15 können in Form und Werkstoff identisch oder in Form und/oder Werkstoff abweichend, an die jeweiligen Gegebenheiten des Anwendungsfalles angepasst, ausgebildet sein.

In jedem der Ausführungsbeispiele ist radial innerhalb des Innenrings 1 ein Wälzlager 28 angeordnet, wobei der Innenring 1 und das Wälzlager 28 eine vormontierbare Einheit 29 bilden. Das Wälzlager 28 umschließt beispielsweise eine Antriebswelle in einem Kraftfahrzeug. Statt des Wälzlagers 28 kann auch ein hier nicht dargestelltes Gleitlager zur Anwendung gelangen.

## Patentansprüche

1. Lager, umfassend einen Innenring (1) und einen den Innenring (1) mit radialem Abstand umschließenden Außenring (2), wobei in dem durch den Abstand gebildeten Spalt (3) zumindest zwei in Umfangsrichtung mit Abstand zueinander benachbarte Stützkörper (4, 5) aus gummielastischem Werkstoff unter elastischer Vorspannung ungebunden zu Innen-(1) und Außenring (2) angeordnet sind.

2. Lager nach Anspruch 1, **dadurch gekennzeichnet, dass** die Stützkörper (4, 5) kraft- und/oder formschlüssig mit dem Innen- (1) und/oder dem Außenring (2) verbunden sind.

3. Lager nach einem der Ansprüche 1 oder 2, **dadurch gekennzeichnet, dass** der Innen- (1) und/oder der Außenring (2) auf den einander zugewandten Seiten Ausnehmungen (6, 7, 8, 9) für die Stützkörper (4, 5) aufweisen, wobei die Begrenzungen der Ausnehmungen (6, 7, 8, 9) kongruent zur Oberfläche (10, 11) der Stützkörper (4, 5) gestaltet sind.

4. Lager nach einem der Ansprüche 1 bis 3, **dadurch gekennzeichnet, dass** zumindest einer der Stützkörper (4, 5) kugelförmig gestaltet ist.

5. Lager nach einem der Ansprüche 1 bis 4, **dadurch gekennzeichnet, dass** zumindest einer der Stützkörper (4, 5) im Wesentlichen würfelförmig gestaltet ist.

6. Lager nach einem der Ansprüche 1 bis 5, **dadurch gekennzeichnet, dass** zumindest einer der Stützkörper (4, 5) im Wesentlichen zylinderförmig gestaltet ist und sich in Umfangsrichtung des Spalts erstreckt.

7. Lager nach einem der Ansprüche 1 bis 6, **dadurch gekennzeichnet, dass** die Stützkörper (4, 5) innerhalb des Spalts (3) gleichmäßig in Umfangsrichtung verteilt angeordnet sind.

8. Lager nach einem der Ansprüche 1 bis 7, **dadurch gekennzeichnet, dass** alle Stützkörper (4, 5) in Form und Werkstoff identisch ausgebildet sind.

9. Lager nach einem der Ansprüche 1 bis 7, **dadurch gekennzeichnet, dass** die Stützkörper (4, 5) in Form und/oder Werkstoff abweichend, an die jeweiligen Gegebenheiten des Anwendungsfalles angepasst, ausgebildet sind.

10. Lager nach einem der Ansprüche 1 bis 9, **dadurch gekennzeichnet, dass** der Innen- (1) und/oder der Außenring (2) aus einem polymeren Werkstoff bestehen.
